# EUROPEAN PATENT SPECIFICATION

(11) **EP 0 763 392 B1**
(45) Date of publication and mention of the grant of the patent: **05.06.2002**
(21) Application number: 96306645.1
(22) Date of filing: 13.09.1996
(51) Int. Cl.: B22C 1/00, B22D 41/02, C04B 35/22, C04B 35/80

(54) **Material for metal casting equipment**
Werkstoff für Metalstranggiessanlage
Matériau pour installation de coulée continue

(30) Priority: 14.09.1995 GB 9518787
(43) Date of publication of application: 19.03.1997
(73) Proprietor: Cape Calsil Systems Limited, Uxbridge, Middlesex, UB8 2JQ (GB)
(72) Inventor: Huttner, Wolf, 21394 Kirchgellersen (GB); Townson, Michael, Alloa, FK10 1DR, Scotland (GB); Stellmach, Winfried, 21382 Brietlingen (DE)
(74) Representative: Carpmael, John William Maurice

(56) References cited:
- EP-A- 0 007 585
- US-A- 3 679 446
- US-A- 4 427 611
- PATENT ABSTRACTS OF JAPAN vol. 013, no. 281 (M-842), 27 June 1989 & JP 01 075139 A (NICHIAS CORP), 20 March 1989,
- DATABASE WPI Section Ch, Week 7948 Derwent Publications Ltd., London, GB; Class L02, AN 79-86611B XP002032869 & JP 54 134 732 A (MITSUBISHI CHEM IND LTD) , 19 October 1979
- PATENT ABSTRACTS OF JAPAN vol. 014, no. 427 (C-0758), 13 September 1990 & JP 02 164778 A (ASUKU:KK), 25 June 1990,
- PATENT ABSTRACTS OF JAPAN vol. 015, no. 373 (C-0869), 19 September 1991 & JP 03 150241 A (MITSUBISHI RAYON CO LTD), 26 June 1991,

## Description

This invention relates to a novel material for use in casting low melting point non-ferrous metals.

The casting of molten non-ferrous metals such as aluminium, tin, zinc etc. involves the direct contact of the molten metal with the parts of the casting equipment such as pouring boxes, launders and troughs, furnace linings, supply channels, spouts, and hot top rings, and it is important that such equipment be produced from, or at least lined or faced with, a material having suitable properties. Amongst these are that the material should have good thermal insulating properties, low heat capacity, high fracture toughness, low oil absorption potential, and should not be wet by the molten metal.

Materials made from asbestos-reinforced calcium silicates have been widely used for this purpose in the past, but with the difficulties subsequently attendant upon the use of asbestos fibres alternative materials have been sought. Calcium silicates have continued to be used, but the asbestos fibre has been replaced by other reinforcing materials, notably carbon fibre. The use of pitch based graphite fibre to reinforce a calcium silicate matrix for this purpose is described in US-A-5073199.

In efforts to find improved materials for use in molten metal casting, attention has turned to the calcium silicate matrix itself, and in GB-A-2 173 505 there is described a material suitable for making metal casting equipment which utilises carbon fibre as reinforcement in a calcium silicate matrix in which the primary component of the matrix is xonotlite.

The use of xonotlite is of particular benefit, due to its low water content and low shrinkage. However, xonotlite is difficult to make, requiring for example extremely rigorous steam curing, high pressure tolerance vessels and high energy costs, and also expensive raw materials such as SiO₂ of very high purity.

Tobermorite is an alternative calcium silicate matrix for making metal casting equipment, being easier and cheaper to make, but it suffers from exhibiting more water of crystallisation than xonotlite and a higher shrinkage. According to Japanese Patent Publication 2-164778 the shrinkage problem can be overcome by including in the composition 10-20 wt% of fibrous wollastonite and 20-30 wt% of crystalline alumina, the alumina serving to dilute the tobermorite and reduce the shrinkage and water evolution, and also to improve the effectiveness of the carbon reinforcing fibres.

We have found that the presence of crystalline alumina in the composition tends to interfere with the formation of the calcium silicate in the autoclave, and causes increased thermal shrinkage and a reduction in the strength of the product.

It is the object of the present invention to provide a process for the production of a material for the manufacture of metal casting equipment which is based on a carbon fibre-reinforced tobermorite matrix, which does not suffer from the disadvantages attendant upon the presence in the material of crystalline alumina.

According to the invention the raw material for the production of the material contains a proportion of pre-autoclaved calcium silicate.

In one embodiment of the invention a process for the production of a material for the manufacture of metal casting equipment comprises
(i) forming an aqueous slurry comprising a) ingredients for the formation of a calcium silicate and b) polyacrylonitrile (P.A.N.)-based carbon fibre,
(ii) moulding the slurry to form a moulded body,
(iii) removing excess water therefrom, and
(iv) autoclaving the moulded body at such a temperature and pressure, and for such a time, as is necessary to convert the ingredients (a) into a calcium silicate matrix substantially comprising tobermorite,
characterised in that the aqueous slurry contains from 1.5 to 25%, by weight based on the slurry solids content, of a pre-autoclaved calcium silicate slurry.

In a second embodiment there is provided a process for producing a material for the manufacture of metal casting equipment comprising
forming an aqueous slurry comprising (a) ingredients for the formation of a calcium silicate matrix and (b) polyacrylonitrile-based carbon fibre; mixing said slurry to form a viscous paste; extruding said viscous paste into the desired form; and autoclaving said form at such a temperature and pressure, and for such a time, as is necessary to convert the ingredients (a) into a calcium silicate matrix substantially comprising tobermorite, characterised in that the aqueous slurry contains from 1.5 to 25%, by weight based on the slurry solids content, of a pre-autoclaved calcium silicate slurry.

The invention is based upon the surprising discovery that the fineness and rheology of the pre-autoclaved calcium silicate assists in the wetting and dispersion of the carbon fibres and substantially improves their effectiveness in reinforcing the material and preventing crack propagation.

Reference herein to the matrix substantially comprising tobermorite is intended to mean that the calcium silicate matrix comprises at least 50%, by weight, of tobermorite; preferably the matrix comprises more than 80%, most preferably more than 85%, by weight, of tobermorite. The matrix may also contain minor amounts of other forms of calcium silicate, especially xonotlite.

The calcium silicate body is reinforced with polyacrylonitrile-based carbon fibres. The carbon fibres are suitably present in the body in an amount between 0.2 and 12%, by weight, preferably 0.5 to 5% by weight. They may suitably have a length between 1 and 15 mm (mms), preferably 2 to 5 mm (mms), and a fibre diameter of 4 to 20 µm (microns), preferably 7 to 10 µm (microns).

The moulded body may also comprise other inert fillers dispersed throughout the matrix. These may constitute from 20 to 75%, by weight, of the moulded body, and a particularly useful inert filler is wollastonite in fibrous form. Wollastonite is especially suitable in an amount of 45 to 55%, by weight, based on the weight of the body.

Following the autoclaving step of the process it will be usual to dry the moulded body in an oven, machine, sand and/or trim it to the desired final shape, and then heat treat it.

The aqueous slurry may also contain any desired inert filler, for example fibrous wollastonite, and it has also been found that it is of advantage to include in the slurry, in an amount of between 0.1 and 3% by weight of the solids content of the slurry, organic fibres of length 1 to 8 mms, to assist in the moulding of the slurry. These fibres may be natural or synthetic organic fibres, e.g. bleached or unbleached wood fibre or other modified cellulose fibres.

Of particular advantage in the process of the invention is the inclusion in the aqueous slurry of a small amount, i.e. 1.5 to 25% by weight on the slurry solids content, of a pre-autoclaved calcium silicate slurry. This can be of either tobermorite or xonotlite, and helps to disperse the carbon fibres uniformly throughout the aqueous slurry, with the advantageous results mentioned above. It is suitably made by autoclaving an aqueous slurry of calcium hydroxide and siliceous material in a CaO/SiO₂ mole ratio of 0.6 to 1.2, in a stirred pressure autoclave at a pressure of 7 to 30 bar for about 1 to 10 hours.

The materials used for the production of the calcium silicate slurries used herein may be, as the calcareous component, lime (calcium hydroxide), calcium oxide or Ordinary Portland Cement; and, as the siliceous component, high purity quartz silica flour, amorphous silica, silica fume or diatomite, for example.

Thus, in a typical method for producing a moulded body of the invention, the following ingredients may be used, on a dry weight basis:-

| | % by weight | | |
|---|---|---|---|
| | Example 1 | Example 2 | Example 3 |
| 1. Pre autoclaved calcium silicate slurry | 1.5 | 20.0 | 2.0 |
| | | | |
| 2. Natural cellulose fibre | 0.5 | 2.0 | 3.0 |
| | | | |
| 3. Fibrous wollastonite | 20.0 | 35.0 | 60.0 |
| | | | |
| 4. Carbon fibre, 3mm (P.A.N. - based) | 2.0 | 2.0 | 3.0 |
| | | | |
| 5. Ca(OH)₂ | 38.5 | 20.8 | 8.6 |
| | | | |
| 6. SiO₂ | 37.5 | 20.2 | 8.4 |
| | | | |
| 7. Calcium silicate fines | - | - | 15.0 |

Lime and silica are mixed in water and autoclaved at a temperature of about 200°C and a pressure of about 18 bar for about 3 hours to produce a slurry (1).

The lime (5) and silica (6) are then mixed in water. The wollastonite (3) is then added, together with any calcium silicate fines (7), and thoroughly mixed in, followed by the cellulose fibres, which are also thoroughly mixed. The slurry (1) is then added, followed by the carbon fibres (4), and the whole is mixed to form an aqueous slurry. This is then formed into shape and water removed. Typically the slurry may be extruded into pipe form or, more likely, sheeted out in sheet or board form. A pressure of 10-30 bar will remove substantially all the water.

The moulding is then subjected to autoclaving at 7-14 bar, typically 10 bar, for about 12 hours to produce a calcium silicate matrix of substantially tobermorite reinforced with carbon fibres and containing wollastonite and natural cellulose fibres. After removal from the autoclave the moulding is dried, sanded and/or trimmed to final shape and heat-treated in air or in a chemically inert gas, for example nitrogen or carbon dioxide, at about 300°C to 850°C for 12 hours to remove any remaining water.

The final products will typically have compositions as follows, on a dry weight basis:-

| | % by weight | | |
|---|---|---|---|
| | Example 1 | Example 2 | Example 3 |
| Wollastonite | 20.1 | 35.7 | 61.86 |
| Carbon fibres | 2.01 | 2.04 | 3.09 |
| Xonotlite | 1.51 | 20.4 | 2.06 |
| Tobermorite | 76.38 | 41.83 | 17.52 |
| Calcium silicate fines | - | - | 15.46 |
| % Tobermorite in Matrix | 98.1 | 67.2 | 89.5 |

The dry densities of the finished products will normally be in the range 500-1500 kg/m³.

The materials are extremely durable when in contact with molten aluminium and other non-ferrous metals, and have a high toughness and strength. They are resistant to thermal cracking when in contact with molten metal. Their thermal shrinkage (less than 0.2% at 750°C) compares well with material produced according to GB-A-2 173 505 (greater than 0.3%), and their flexural strength, at 17mPa, compares well with that (9mPa) of material according to GB-A-2 173 505.

The low oil absorption is a particular feature of the materials of the invention. This feature is very important in, for example, the casting of aluminium where oil is used in contact with calcium silicate parts. Absorption of oil causes softening and degradation of the physical properties of the calcium silicate and early failure of the parts. In addition, at the high temperatures involved the absorbed oil decomposes and the gases so produced cause defects on the surface of the cast metal.

It is clear from the results shown in Tables 1 & 2 below that the materials of the present invention are superior in this respect to the materials described in GB-A-2173505 and US-A-507 3199.

### Example A

The materials used in this Example and Example B were as follows:-

Invention - The material described in Example 2 above.

Comparison 1 - Material made in accordance with GB-A-2173505 containing PAN-based carbon fibre and a predominantly xonotlite matrix.

Comparison 2 - Material made in accordance with US-A-5073199 containing pitch-based carbon fibres and a predominantly tobermorite matrix.
(i) Samples 25mm x 50mm x 50mm were dried at 105°C for 16 hours, allowed to cool, weighed, and the Shore D hardness measured.
(ii) The samples were immersed in a castor oil at a temperature of 205°C+/- 5°C.
(iii) The samples were removed and re-weighed after intervals of 30 minutes, 60 minutes and 180 minutes and the Shore D hardness measured.

The results are shown in the attached Table 1.

### Example B

The procedure was the same as for Example A but in this case the samples were first immersed in molten aluminium at 700°C for 30 minutes. The results are shown in Table 2.

The material made in accordance with the invention is predominantly useful in the manufacture of metal casting equipment. However, because of its excellent physical and thermal properties it is proposed that it will replace asbestos-reinforced calcium silicate in many applications.

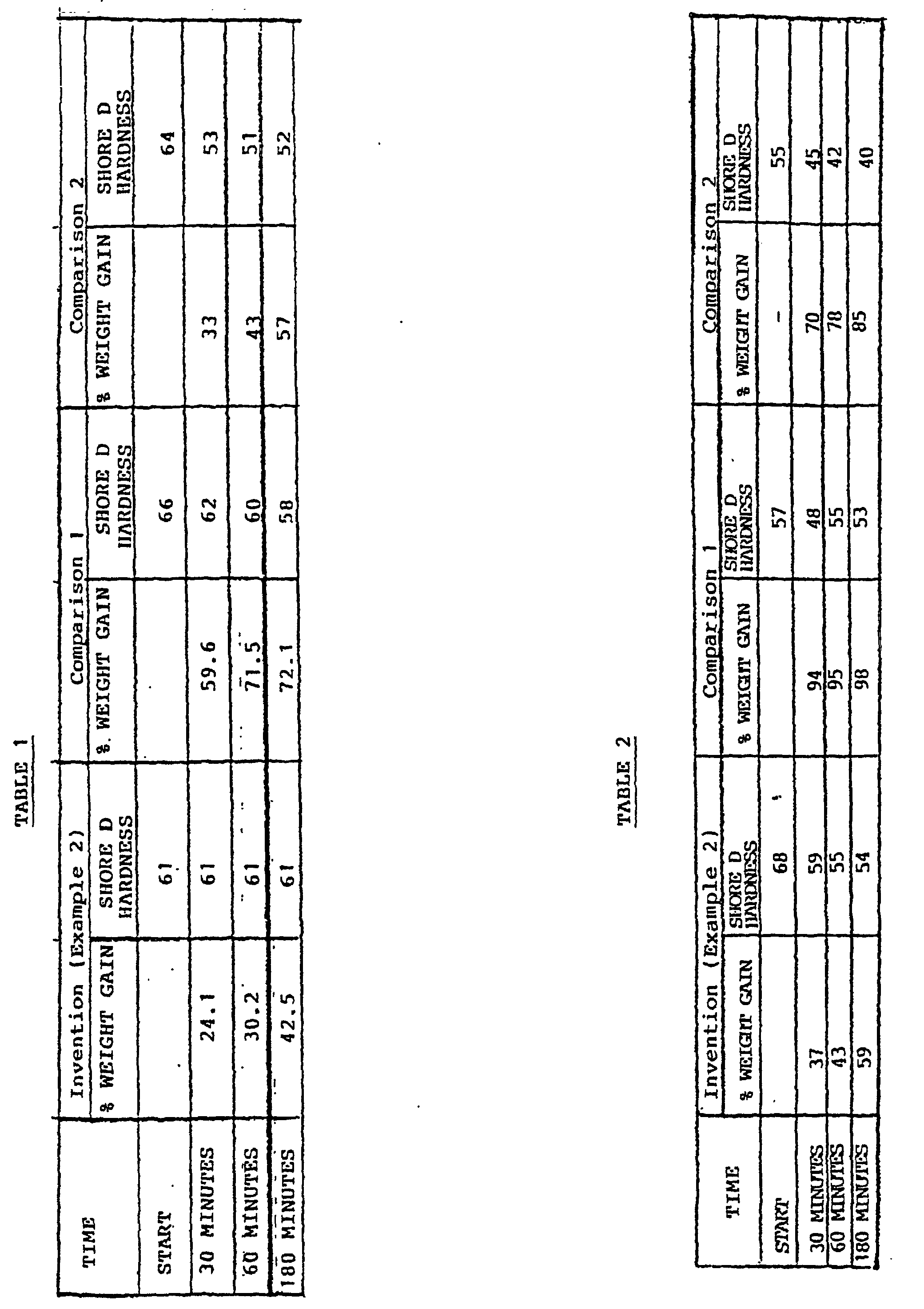

## Claims

1. A process for producing a material for the manufacture of metal casting equipment comprising
(i) forming an aqueous slurry comprising a) ingredients for the formation of a calcium silicate and b) polyacrylonitrile (P.A.N.)-based carbon fibre,
(ii) moulding the slurry to form a moulded body,
(iii) removing excess water therefrom, and
(iv) autoclaving the moulded body at such a temperature and pressure, and for such a time, as is necessary to convert the ingredients (a) into a calcium silicate matrix substantially comprising tobermorite,
**characterised in that** the aqueous slurry contains from 1.5 to 25%, by weight based on the slurry solids content, of a pre-autoclaved calcium silicate slurry.

2. A process for producing a material for the manufacture of metal casting equipment comprising
forming an aqueous slurry comprising (a) ingredients for the formation of a calcium silicate matrix and (b) polyacrylonitrile-based carbon fibre; mixing said slurry to form a viscous paste; extruding said viscous paste into the desired form; and autoclaving said form at such a temperature and pressure, and for such a time, as is necessary to convert the ingredients (a) into a calcium silicate matrix substantially comprising tobermorite, **characterised in that** the aqueous slurry contains from 1.5 to 25%, by weight based on the slurry solids content, of a pre-autoclaved calcium silicate slurry.

3. A process as claimed in claim 1 or 2 in which the matrix comprises 50 to 100%, by weight, of tobermorite.

4. A process as claimed in any of claims 1 to 3 wherein the carbon fibres are present in an amount of 0.2 to 12%, by weight.

5. A process as claimed in claim 4 wherein the carbon fibres are present in an amount of 0.5 to 5%, by weight.

6. A process as claimed in any of claims 1 to 5 wherein the carbon fibres have a length of 1 to 15 mm (mms) and a diameter of 4 to 20 µm (microns).

7. A process as claimed in claim 6 wherein the carbon fibres have a length of 2 to 5 mm (mms) and a diameter of 7 to 10 µm (microns).

8. A process as claimed in any of claims 1 to 7 wherein the slurry contains 20 to 75%, based on the solids weight of the slurry, of a non-carbon inert filler.

9. A process as claimed in claim 8 wherein said non-carbon inert filler is fibrous wollastonite.

## Patentansprüche

1. Verfahren zum Herstellen eines Materials zur Herstellung einer Metallgußausstattung, umfassend:
(i) Bilden einer wässrigen Aufschlämmung, umfassend a) Bestandteile zur Bildung eines Calciumsilikats und b) Kohlefaser auf Polyacrylnitril (P.A.N.)-Basis,
(ii) Formen der Aufschlämmung zur Bildung eines Formkörpers,
(iii) Entfernen des Überschusses an Wasser davon und
(iv) Behandeln des Formkörpers im Autoklaven bei einer solchen Temperatur und einem solchen Druck und für eine solche Zeitdauer, wie es notwendig ist, die Bestandteile (a) in eine Calciumsilikatmatrix, die im wesentlichen Tobermorit umfaßt, umzuwandeln,
**dadurch gekennzeichnet, daß** die wässrige Aufschlämmung 1,5 bis 25 Gew.-%, bezogen auf den Feststoffgehalt der Aufschlämmung, einer vorautoklavierten Calciumsilikataufschlämmung enthält.

2. Verfahren zur Herstellung eines Materials zur Herstellung einer Metallgußausstattung, umfassend
das Bilden einer wässrigen Aufschlämmung, umfassend (a) Bestandteile zur Bildung einer Calciumsilikatmatrix und (b) Kohlefaser auf Polyacrylnitrilbasis; das Mischen der Aufschlämmung unter Bildung einer viskosen Paste; das Extrudieren der viskosen Paste in eine gewünschte Form, und das Behandeln der Form in einem Autoklaven bei einer solchen Temperatur und einem solchen Druck und für eine solche Zeitdauer, wie es notwendig ist, die Bestandteile (a) in eine Calciumsilikatmatrix, die im wesentlichen Tobermorit umfaßt, umzuwandeln, **dadurch gekennzeichnet, daß** die wässrige Aufschlämmung 1,5 bis 25 Gew.-%, bezogen auf den Feststoffgehalt der Aufschlämmung, einer vorautoklavierten Calciumsilikataufschlämmung enthält.

3. Verfahren nach Anspruch 1 oder 2, worin die Matrix 50 bis 100 Gew.-% Tobermorit umfaßt.

4. Verfahren nach einem der Ansprüche 1 bis 3, wobei die Kohlefasern in einer Menge von 0,2 bis 12 Gew.-% vorliegen.

5. Verfahren nach Anspruch 4, wobei die Kohlefasern in einer Menge von 0,5 bis 5 Gew.-% vorliegen.

6. Verfahren nach einem der Ansprüche 1 bis 5, wobei die Kohlefasern eine Länge von 1 bis 15 mm (mms) und einen Durchmesser von 4 bis 20 µm (Microns) aufweisen.

7. Verfahren nach Anspruch 6, wobei die Kohlefasern eine Länge von 2 bis 5 mm (mms) und einen Durchmesser von 7 bis 10 um (Microns) aufweisen.

8. Verfahren nach einem der Ansprüche 1 bis 7, wobei die Aufschlämmung 20 bis 75 %, bezogen auf das Feststoffgewicht der Aufschlämmung, eines inerten Nichtkohlenstoff-Füllmittels enthält.

9. Verfahren nach Anspruch 8, wobei das inerte Nichtkohlenstoff-Füllmittel faserartiges Wollastonit ist.

## Revendications

1. Procédé de production d'un matériau pour la fabrication d'une installation de coulage de métal comprenant
i) la formation d'une suspension aqueuse comprenant a) des ingrédients pour la formation d'un silicate de calcium et b) une fibre de carbone à base de polyacrylonitrile (P.A.N.)
ii) le moulage d'une suspension pour former un corps moulé,
iii) le retrait de l'eau en excès de celui-ci, et
iv) le traitement en autoclave du corps moulé à une température et pression, et pendant le temps nécessaires pour convertir les ingrédients a) en une matrice de silicate de calcium
comprenant essentiellement de la tobermorite, **caractérisé en ce que** la suspension aqueuse contient de 1,5 à 25% en poids sur base de la teneur en solides de la suspension, d'une suspension de silicate de calcium pré-traitée en autoclave.

2. Procédé de production d'un matériau pour la fabrication d'une installation de coulage de métal comprenant
la formation d'une suspension aqueuse comprenant a) des ingrédients pour la formation d'une matrice de silicate de calcium et b) une fibre de carbone à base de polyacrylonitrile; le mélange de ladite suspension pour former une pâte visqueuse ; l'extrusion de ladite pâte visqueuse en la forme souhaitée ; et le traitement en autoclave de ladite forme à une température et pression et pendant le temps nécessaires pour convertir les ingrédients a) en une matrice de silicate de calcium comprenant essentiellement de la tobermorite,
**caractérisé en ce que** la suspension aqueuse contient de 1,5 à 25% en poids sur base de la teneur en solides de la suspension, d'une suspension de silicate de calcium pré-traitée en autoclave.

3. Procédé selon la revendication 1 ou 2 dans lequel la matrice comprend 50 à 100%, en poids, de tobermorite.

4. Procédé selon l'une quelconque des revendications 1 à 3 dans lequel les fibres de carbone sont présentes en une quantité de 0,2 à 12%, en poids.

5. Procédé selon la revendication 4 dans lequel les fibres de carbone sont présentes en une quantité de 0,5 à 5%, en poids.

6. Procédé selon l'une quelconque des revendications 1 à 5 dans lequel les fibres de carbone ont une longueur de 1 à 15 mm et un diamètre de 4 à 20 µm (microns).

7. Procédé selon la revendication 6 dans lequel les fibres de carbone ont une longueur de 2 à 5 mm et un diamètre de 7 à 10 µm (microns).

8. Procédé selon l'une quelconque des revendications 1 à 7 dans lequel la suspension contient 20 à 75%, sur base du poids des solides de la suspension, d'une charge inerte sans carbone.

9. Procédé selon la revendication 8 dans lequel ladite charge inerte sans carbone est la wollastonite fibreuse.
